Europäisches Patentamt

European Patent Office

Office européen des brevets

(11) Publication number: **0 052 469**
**B1**

# (12) EUROPEAN PATENT SPECIFICATION

(45) Date of publication of patent specification: **07.05.86**

(51) Int. Cl.⁴: **C 08 L 23/16, H 01 B 3/44**

(21) Application number: **81305302.2**

(22) Date of filing: **09.11.81**

(54) Thermoplastic elastomer and electrical plug or connector made therewith.

(30) Priority: **10.11.80 US 205226**

(43) Date of publication of application:
**26.05.82 Bulletin 82/21**

(45) Publication of the grant of the patent:
**07.05.86 Bulletin 86/19**

(84) Designated Contracting States:
**DE FR GB IT NL**

(56) References cited:
**FR-A-2 323 734**
**FR-A-2 365 601**
**FR-A-2 374 355**
**GB-A-1 550 207**
**US-A-3 470 127**

(73) Proprietor: **UNIROYAL, INC.**
**1230 Avenue of the Americas Rockefeller Center**
**New York, New York 10020 (US)**

(72) Inventor: **Drzal, Robert S.**
**46 Tanglewood Lane**
**Naugatuck Connecticut 06770 (US)**
Inventor: **Shedd, Charles D.**
**71 Meadowlark Drive**
**Waterbury Connecticut 06708 (US)**

(74) Representative: **Geldard, David Guthrie et al**
**URQUHART-DYKES AND LORD 11th Floor,**
**Tower House Merrion Way**
**Leeds, LS2 8PB West Yorkshire (GB)**

Courier Press, Leamington Spa, England.

## Description

This invention relates to a thermoplastic elastomer and to an electrical plug or connector made therefrom.

Various thermoplastic elastomers based on blends of EP (ethylene-propylene) rubbers and poly-alpha-olefin resins, some of which blends include oil, are known. Representative references of interest include US—A—3806558; US—A—4081169; US—A—4036912; US—A—4132688; and US—A—3470127. Particular reference may be made to US—A—3470127 which discloses a blend including ethylene-propylene-non-conjugated diene terpolymer rubber, a further polymer which may be crystalline polypropylene, a plasticizer or softener which may be a naphthenic or paraffinic extender oil and an inorganic filler, which will be capable of absorbing a portion of the extender oil. The compositions disclosed are stretchable and elastic and are suitable for the manufacture of self-fusing electrical insulating tape having good dielectric strength, high temperature resistance and high stretch and flexibility properties.

The present invention seeks to provide a polymer having properties that make it suitable for use as an electrical plug or connector. Good electrical properties and high temperature resistance are necessary, but it is also required to have high flexural modulus, a property not taught by US—A—3470127, and to obtain this property without deleterious effect on the other required properties of the composition.

From one aspect, the invention provides a thermoplastic elastomeric composition comprising a blend of:

(a) ethylene-propylene-non-conjugated diene terpolymer rubber;
(b) an essentially crystalline propylene polymer;
(c) a naphthenic or paraffinic extender oil; and
(d) an inorganic filler suitable to absorb at least a portion of said extender oil (c);

characterised in that in order to render the composition suitable for use for making electrical plugs and connectors:—

(i) component (a) has an ethylene content of from 71 to 85% by weight and a gel content of from 10 to 45% by weight measured in cyclohexane at room temperature;

(ii) the weight ratio of (a)/(b) is from 40/60 to 60/40;

(iii) the concentration of (c) is from 33,3 to 125 parts per 100 parts by weight of (a);

(iv) the concentration of (c) is from 20 to 100 parts per 100 parts by weight of (a)+(b);

(v) the concentration of (d) is from 10 to 100 parts per 100 parts by weight of (a)+(b); and

(vi) the weight ratio of (c)/(d) is from 0.5/1 to 1.25/1.

From another aspect the invention provides an electrical plug or connector made from a composition as aforesaid. The compositions of the invention are characterised by unusual resistance to high temperatures, coupled with high flexural modulus, and they provide an improved margin of safety over materials commonly used for electrical plugs and connectors, especially polyvinyl chloride, when the electrical articles made therefrom are subjected to excessive heat due to overload or other causes. Furthermore, electrical plugs and connectors made from the present composition need no additional cure and may be readily formed by injection moulding, if desired directly onto an electrical cord or a cable. In this way a moisture impenetrable seal is formed between the plug or connector and the cord or cable, making the final product suitable for outdoor usage.

The ethylene-propylene-non-conjugated diene terpolymer (a) employed in the invention preferably contains 71—85% of ethylene, 28—13% of propylene and 2—20% of non-conjugated diene (by weight). Examples of suitable non-conjugated dienes are dicyclopentadiene, 5-ethylidene-2-norbornene and 1,4-hexadiene. The terpolymer employed contains from 10 to 45%, preferably 15 to 35%, by weight, of gel, measured in cyclohexane at room temperature.

The essentially crystalline propylene polymer (b) employed in the invention is polypropylene homopolymer resin or a propylene copolymer resin, preferably having a melt flow index of from 0.4 to 20.

The compositions of the invention are readily prepared using suitable mixing equipment such as an internal mixer, compounding extruder or an open mill. All the ingredients may be charged initially to the mixing device, although it is advisable to add the extender oil (c) incrementally especially at relatively high oil concentrations. It is essential that during the blending operation the temperature be brought at least up to the crystalline melting point of the propylene homo- or co-polymer, thus assuring complete melting of said homo- or co-polymer.

Ordinarily, mixing is carried out for about 5 to 10 minutes including one minute or more at or above the crystalline melting point of the polypropylene polymer.

If partial cure of the blend is desired, a suitable curative may be added following the procedure of US—A—3806558. It will be understood that the partial cure is sufficient to lightly crosslink the material without destroying its thermoplastic nature, i.e. its ability to be processed and reprocessed repeatedly.

The preferred flexural moduli of the composition of the invention range from over 73,8 to 103.5 MPa. Extrusion value (capillary rheometer) should preferably range from 36—82 kg, most preferably from 45—55 kg.

Imperfections of the shaped articles may occur at times due to gate distortion (e.g. swirls); a partial cure of the composition during or after the blending step and prior to moulding usually overcomes such difficulty.

Example I

Several compositions are prepared using the following ingredients:

EPDM/I:ethylene=49%, propylene=46%, DCPD=5%, ML—4=60 at 125°C.

EPDM/II:ethylene=65%, propylene=30%, DCPD=5%, ML—4=42 at 125°C.

EPDM/III:ethylene=71%, propylene=24%, DCPD=5%, ML—4=50 at 125°C. (all by weight).

Propylene (PP):MFI=11 (ASTM)

Extender Oil:Paraffinic, viscosity 61.5 at 100°C (SUS), molecular weight ca. 530.

Curative:Alpha, alpha'-bis(t-butylperoxy) diisopropyl-benzene, Vul-Cup (trademark) 40KE; 40% active.

The above ingredients, except the extender oil, are charged to a Banbury (trademark) type B internal mixer at room temperature (no cooling or heating is applied to the mixer). Using a No. 2 speed, the chart temperature (indicating essentially the temperature on the internal wall of the mixer) reaches 100°C within 30 seconds at which time one-half the extender oil is introduced and mixing is continued for about one minute, after which time the temperature is 138°C. The remaining portion of extender oil is charged, and blending is continued for two minutes; the temperature reaches 160°C. Mixing is continued for an additional two minutes, then the composition is dumped, sheeted off on a mill and diced.

It should be noted that it has been observed that actual batch temperatures are about 15 to 20°C higher than the ones indicated on the chart.

Test samples: Eight placques 7.62 cm×15.24 cm×0.3175 cm from each run are prepared by injection moulding the material using a Negri-Bossi (trademark) machine at 193°C throughout and 2.76 MPa pressure.

Strips 3.81 cm×0.076 cm are extruded employing a Davis Standard (trademark) 3.81 cm extruder using the following temperature profile: rear (190°C), centre (204—216—232°C), die (232°C) at 60 RPM.

The samples are tested with the results summarized in Table I.

Testing procedures:

Tensile, elongation—ASTM D-412

Hardness—Shore A

Flex. Modulus—ASTM D-790 proc. B

Extrusion—Instron (trademark)

Capillary rheometer

Capillary diameter=1.524 mm.

TABLE I

| Run No. (Parts by weight) | 1* | 2 | 3 | 4 | 5 | 6* | 7 | 8 | 9 | 10* | 11* |
|---|---|---|---|---|---|---|---|---|---|---|---|
| Recipe EPDM/I | — | — | — | — | — | — | — | — | — | 60 | |
| EPDM/II | — | — | — | — | — | — | — | — | — | — | 60 |
| EPDM/III | 80 | 60 | 40 | 60 | 60 | 60 | 60 | 60 | 60 | — | — |
| PP | 20 | 40 | 60 | 40 | 40 | 40 | 40 | 40 | 40 | 40 | 40 |
| $CaCO_3$ | 40 | 40 | 40 | 40 | 40 | 40 | 40 | — | 40 | 40 | 40 |
| Talc | — | — | — | — | — | — | — | 40 | — | — | — |
| Extender Oil | 50 | 50 | 50 | 50 | 50 | 80 | 20 | 50 | 50 | 50 | 50 |
| Curative 100% Active | — | — | — | — | — | — | — | — | 0.16 | — | — |
| **Physical Properties—Placques** | | | | | | | | | | | |
| Tensile, k/Pa | 4800 | 5450 | 7040 | 4900 | 5870 | 4810 | 7450 | 4970 | 4900 | 6140 | 3380 |
| % Elongation, % | 690 | 660 | 560 | 600 | 660 | 630 | 580 | 520 | 500 | 490 | 390 |
| Shore A Hardness | 70 | 83 | 92 | 84 | 82 | 76 | 90 | 95 | 84 | 80 | 80 |
| Flex Mod, MPa | 24.2 | 73.8 | 179 | 83 | 81.4 | 35.9 | 172.5 | 99.4 | 74.5 | 58 | 59.3 |
| Extrusion, Kg at 410 $sec^{-1}$, 95.5°C | 86 | 52 | 37 | 55 | 47 | 31 | 87 | 51 | 49 | 45 | 47 |
| **Physical Properties—Strips** | | | | | | | | | | | |
| Tensile, kPa | 4760 | 6490 | 7660 | 6830 | 7250 | 4550 | 9660 | 5590 | 4550 | 5520 | 5450 |
| % Elongation, % | 810 | 710 | 550 | 660 | 690 | 690 | 630 | 530 | 510 | 580 | 610 |
| Shore A Hardness | 54 | 70 | 81 | 75 | 75 | 64 | 79 | 79 | 75 | 74 | 74 |

*comparative example

Electrical plugs and connectors were made from the compositions of runs 2 to 5 and 7 to 9. They exhibited high resistance to deformation as evidence by the high flexural modulus figures of the placques indicated in Table I, the lowest of which is 73.8 MPa. This contrasts with the substantially lower figures given in the comparative examples and with the material of the stretchable elastic tape that is disclosed in US—A—3470127. Additionally the plugs and connectors had good strength, good electrical properties and excellent temperature resistance.

**Claims**

1. A thermoplastic elastomeric composition comprising a blend of:

(a) ethylene-propylene-non-conjugated diene terpolymer rubber;
(b) an essentially crystalline propylene polymer;
(c) naphthenic or paraffinic extender oil; and
(d) an inorganic filler suitable to absorb at least a portion of said extender oil (c);

characterised in that, in order to render the composition suitable for use for making electrical plugs and connectors:—

(i) component (a) has an ethylene content of from 71 to 85% by weight and a gel content of from 10 to 45% by weight measured in cyclohexane at room temperature;
(ii) the weight ratio of (a)/(b) is from 40/60 to 60/40;
(iii) the concentration of (c) is from 33,3 to 125 parts per 100 parts by weight of (a);
(iv) the concentration of (c) is from 20 to 100 parts per 100 parts by weight of (a)+(b);
(v) the concentration of (d) is from 10 to 100 parts per 100 parts by weight of (a)+(b); and
(vi) the weight ratio of (c)/(d) is from 0.5/1 to 1.25/1.

2. A composition as claimed in claim 1 in which the said extender oil (c) is paraffinic.

3. A composition as claimed in claim 1 or claim 2 in which the said propylene polymer (b) is polypropylene.

4. A composition as claimed in any one of the preceding claims in which the said filler (d) is talc.

5. A composition as claimed in any one of the preceding claims in which the said filler (d) is calcium carbonate.

6. A composition as claimed in any one of the preceding claims, the composition being partially cured.

7. An electrical plug or connector made from a composition according to any one of the preceding claims.

**Patentansprüche**

1. Thermoplastische, elastomere Zusammensetzung, umfassend eine Mischung aus:

(a) Äthylen-Propylen-nicht-konjugiertem Dien-Terpolymer-Kautschuk;
(b) einem im wesentlichen kristallinen Propylenpolymer;
(c) naphtenischem oder paraffinischem Streckb.z.w. Extenderöl;
(d) einem anorganischen, zur Adsorption mindestens eines Teils dieses Strecköls (c) geeigneten Füllstoff;

dadurch gekennzeichnet, daß die Zusammensetzung—um sie zur Verwendung für die Herstellung von elektrischen Steckern und Anschlüssen geeignet zu machen—folgende Merkmale aufweist:

(i) Bestandteil (a) weist einen Äthylengehalt von 71 bis 85 Gew.-% und einen Gelgehalt von 10 bis 45 Gew.-%, gemessen in Cyclohexan bei Raumtemperatur auf;
(ii) das Gewichtsverhältnis von (a)/(b) beträgt 40/60 bis 60/40;
(iii) die Konzentration von (c) beträgt 33,3 bis 125 Teile je 100 Gewichtsteile von (a);
(iv) die Konzentration von (c) beträgt 20 bis 100 Teile je 100 Gewichtsteile von (a)+(b);
(v) die Konzentration von (d) beträgt 10 bis 100 Teile je 100 Gewichtsteile von (a)+(b); und
(vi) das Gewichtsverhältnis von (c)/(d) beträgt 0,5/1 bis 1,25/1.

2. Zusammensetzung nach Anspruch 1, dadurch gekennzeichnet, daß das Strecköl (c) paraffinisch ist.

3. Zusammensetzung nach Anspruch 1 oder 2, dadurch gekennzeichnet, daß das Propylenpolymer (b) Polypropylen ist.

4. Zusammensetzung nach einem der vorhergehenden Ansprüche, dadurch gekennzeichnet, daß der Füllstoff (d) Talk ist.

5. Zusammensetzung nach einem der vorhergehenden Ansprüche dadurch gekennzeichnet, daß der Füllstoff (d) Kalzium-carbonat ist.

6. Zusammensetzung nach einem der vorhergehenden Ansprüche, dadurch gekennzeichnet, daß die Zusammensetzung teilweise gehärtet ist.

7. Elektrischer Stecker oder Anschluß, dadurch gekennzeichnet, daß sie aus einer Zusammensetzung gemäß einem der vorhergehenden Ansprüche hergestellt wurden.

**Revendications**

1. Composition élastomère thermoplastique comprenant un mélange de:

(a) un caoutchouc d'un terpolymère d'éthylènepropylène-diène non conjugué;
(b) un polymère de propylène essentiellement cristallin;
(c) une huile de charge naphténique ou paraffinique; et
(d) une charge inorganique appropriée pour absorber au moins une portion de ladite huile de charge (c);

caractérisée en ce que afin de rendre la composition appropriée à une utilisation à la production de prises et connecteurs électriques:

(i) le composant (a) a une teneur en éthylène de 71 à 85% en poids et une teneur en gel de 10 à 45% en poids en mesurant dans le cyclohexane à la température ambiante;

(ii) le rapport pondéral de (a)/(b) est de 40/60 à 60/40;

(iii) la concentration de (c) est de 33,3 à 125 parties pour 100 parties en poids de (a);

(iv) la concentration de (c) est de 20 à 100 parties pour 100 parties en poids de (a)+(b);

(v) la concentration de (d) est de 10 à 100 parties pour 100 parties en poids de (a)+(b); et (vi) le rapport pondéral de (c)/(d) est de 0,5/1 à 1,25/1.

2. Composition selon la revendication 1 où ladite huile de charge (c) est paraffinique.

3. Composition selon la revendication 1 ou la revendication 2 où ledit polymère de propylène (b) est du polypropylène.

4. Composition selon l'une quelconque des revendication précédentes où ladite charge (d) est du talc.

5. Composition selon l'une quelconque des revendications précédentes où ladite charge (d) est du carbonate de calcium.

6. Composition selon l'une quelconque des revendications précédentes, la composition étant partiellement durcie.

7. Prise ou connecteur électrique fait d'une composition selon l'une quelconque des revendications précédentes.